# EUROPEAN PATENT APPLICATION

(11) **EP 4 841 729 A1**
(43) Date of publication of application: **18.11.2026**
(21) Application number: 26177786.6
(22) Date of filing: 11.05.2026
(51) Int. Cl.: H01M 10/052, H01M 4/36, H01M 4/38, H01M 4/62, H01M 10/0562, H01M 10/0564

(54) **ELECTRODE COMPOSITE, BATTERY, SOLID-STATE BATTERY, AND MANUFACTURING METHOD FOR ELECTRODE COMPOSITE**

(30) Priority: 15.05.2025 JP 2025082111
(71) Applicant: Toyota Jidosha Kabushiki Kaisha, Toyota-shi, Aichi-ken 471-8571 (JP)
(72) Inventor: NOMOTO, Kazushige, Toyota-shi, Aichi-ken, 471-8571 (JP); KUDO, So, Toyota-shi, Aichi-ken, 471-8571 (JP)
(74) Representative: Winter, Brandl - Partnerschaft mbB

(57) **Abstract**

In an electrode composite containing first and second composite particles, the composite particles each contain an Si-based active material and a binder, and each have an outer edge region (α) having an outer edge (E) and an inner region (β) inward of the outer edge region (α) in a sectional shape. Where proportions of the binder in the outer edge region (α) and the inner region (β) of each first composite particle are respectively X1 and X2, and proportions of the binder in the outer edge region (α) and the inner region (β) of each second composite particle are respectively Y1 and Y2, the X1 and the X2 satisfy 1.2 ≤ (X1/X2), the Y1 and the Y2 satisfy (Y1/Y2) < 1.2, and a proportion of the first composite particles to a total of the first and second composite particles is higher than or equal to 5 wt% and lower than or equal to 60 wt%.

## Description

### BACKGROUND OF THE INVENTION

### 1. Field of the Invention

The disclosure relates to an electrode composite, a battery, a solid-state battery, and a manufacturing method for an electrode composite.

### 2. Description of Related Art

In recent years, with the rapid proliferation of electronic instruments, such as personal computers and mobile phones, the development of batteries used as their power supplies has been proceeding. In the automotive industry, for example, the development of batteries used in hybrid electric vehicles (HEVs), plug-in hybrid electric vehicles (PHEVs), and battery electric vehicles (BEVs) is in progress. Active materials containing Si elements (Si-based active materials) are known as electrode active materials.

For example, Japanese Unexamined Patent Application Publication No. 2019-121557 (JP 2019-121557 A) describes a negative electrode layer that includes a negative electrode active material and a sulfide solid electrolyte, in which the negative electrode active material is composite particles including a plurality of particles containing Si elements or Sn elements and a binder, and the voidage is lower than or equal to 15%. Japanese Unexamined Patent Application Publication No. 2024-017879 (JP 2024-017879 A) describes active material composite particles including Si and resin.

### SUMMARY OF THE INVENTION

Si has a large theoretical capacity and is effective for increasing the energy density of batteries. On the other hand, Si undergoes a large volume change during charging and discharging. For this reason, there is a concern that the volume change during charging and discharging may be significant in an electrode layer including an active material containing Si (Si-based active material). When the amount of volume change of the electrode layer is large, for example, peeling of the electrode layer may occur, with the result that the battery resistance may increase. When the amount of volume change of the electrode layer is large, for example, it may be necessary to increase the strength and size of a restraining member in the battery, with the result that the energy density of the battery may decrease.

The disclosure provides an electrode composite capable of suppressing a volume change of an electrode layer.

A first aspect of the disclosure provides an electrode composite. The electrode composite includes first composite particles and second composite particles. The first composite particles and the second composite particles each contain an Si-based active material and a binder. The first composite particles and the second composite particles each have an outer edge region having an outer edge and an inner region located inward of the outer edge region in a sectional shape. Where a proportion of the binder in the outer edge region of each of the first composite particles is X1, a proportion of the binder in the inner region of each of the first composite particles is X2, a proportion of the binder in the outer edge region of each of the second composite particles is Y1, and a proportion of the binder in the inner region of each of the second composite particles is Y2, the X1 and the X2 satisfy 1.2 ≤ (X1/X2), the Y1 and the Y2 satisfy (Y1/Y2) < 1.2, and a proportion of the first composite particles to a total of the first composite particles and the second composite particles is higher than or equal to 5 wt% and lower than or equal to 60 wt%.

In the first aspect, the Si-based active material may have voids inside.

In the first aspect, the proportion of the first composite particles may be higher than or equal to 10 wt%.

In the first aspect, the proportion of the first composite particles may be lower than or equal to 50 wt%.

In the first aspect, the X1 and the X2 may satisfy (X1/X2) ≤ 2.0.

In the first aspect, the X1 and the X2 may satisfy 1.5 ≤ (X1/X2).

A second aspect of the disclosure provides a battery. The battery includes a positive electrode layer, a negative electrode layer, and an electrolyte layer disposed between the positive electrode layer and the negative electrode layer. The positive electrode layer or the negative electrode layer contains the electrode composite according to the first aspect.

In the second aspect, the negative electrode layer may contain the electrode composite.

In the second aspect, the electrolyte layer may contain a solid electrolyte.

In the second aspect, the electrolyte layer may contain a sulfide solid electrolyte as the solid electrolyte.

A third aspect of the disclosure provides a solid-state battery. The solid-state battery includes a positive electrode layer, a negative electrode layer, and a solid electrolyte layer disposed between the positive electrode layer and the negative electrode layer. The positive electrode layer or the negative electrode layer contains the electrode composite according to the first aspect.

A fourth aspect of the disclosure provides a manufacturing method for manufacturing the electrode composite according to the first aspect. The manufacturing method includes the preparing first composite particles by obtaining the first composite particles through a spray drying method, and preparing the second composite particles by obtaining the second composite particles through the spray drying method.

According to the aspects of the disclosure, it is possible to provide an electrode composite capable of suppressing a volume change of an electrode layer.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A is a schematic cross-sectional view that illustrates a first composite particle and a second composite particle in the disclosure;
FIG. 1B is a schematic cross-sectional view that illustrates the first composite particle and the second composite particle in the disclosure;
FIG. 2 is a schematic cross-sectional view that illustrates a battery in the disclosure; and
FIG. 3 is a flowchart that illustrates a manufacturing method for an electrode composite in the disclosure.

### DETAILED DESCRIPTION OF EMBODIMENTS

Hereinafter, an electrode composite, a battery, and a manufacturing method for the electrode composite in the disclosure will be described in detail. The drawings shown below are schematic, and the sizes and shapes of respective portions are exaggerated as needed for the sake of easy understanding.

### A. Electrode Composite

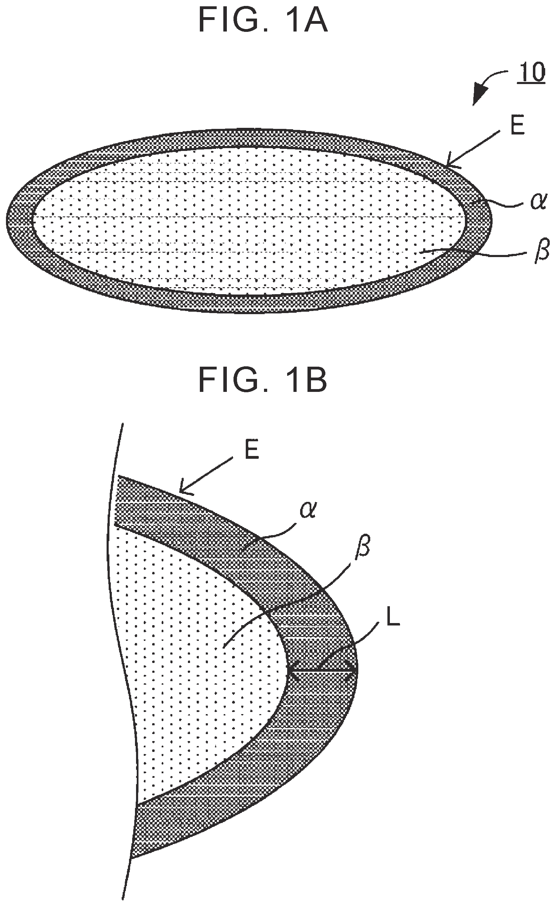

An electrode composite in the disclosure includes first composite particles and second composite particles. The first composite particles and the second composite particles each contain an Si-based active material and a binder. As shown in FIG. 1A and FIG. 1B, the first composite particles and the second composite particles each have an outer edge region α having an outer edge E and an inner region β located inward of the outer edge region α in a sectional shape. FIG. 1B is a partially enlarged view of FIG. 1A. Where the proportion of the binder in the outer edge region α of each of the first composite particles is X1, the proportion of the binder in the inner region β of each of the first composite particles is X2, the proportion of the binder in the outer edge region α of each of the second composite particles is Y1, and the proportion of the binder in the inner region β of each of the second composite particles is Y2, X1 and X2 satisfy 1.2 ≤ (X1/X2), and Y1 and Y2 satisfy (Y1/Y2) < 1.2. Furthermore, in the electrode composite, the proportion of the first composite particles to the total of the first composite particles and the second composite particles is higher than or equal to 5 wt% and lower than or equal to 60 wt%.

According to the disclosure, since the predetermined first composite particles and the predetermined second composite particles are contained in predetermined proportions, the electrode composite can reduce the amount of volume change of the electrode layer.

As will be described in detail later, in the first composite particle, the binder is more unevenly distributed to the vicinity of the outer edge compared to the second composite particle. In the second composite particle, the binder is more dispersed than in the first composite particle. Here, it is believed that composite particles (dispersed particles) with a more dispersed binder can more effectively absorb the expansion of the contained Si-based active material and, as a result, can reduce the expansion of the composite particles themselves. On the other hand, dispersed particles are prone to deformation during pressing when an electrode layer is produced. When only dispersed particles are used as the active material, voids between the composite particles and voids within the composite particles may collapse, with the result that a volume change of the electrode layer may not be sufficiently suppressed. In contrast, it is believed that composite particles (unevenly distributed particles) in which the binder is unevenly distributed to the vicinity of the outer edge can suppress the shape change of the composite particles during production of an electrode due to the abundant binder in the outer edge region, and the voids between the composite particles can be effectively maintained. From the above viewpoint, the inventors have conducted intensive studies, found that, when the electrode composite contains particles with a more unevenly distributed binder (first composite particles) and particles with a more dispersed binder (second composite particles) in predetermined proportions, the volume change of the electrode layer can be more effectively suppressed, and completed the disclosure.

### 1. First Composite Particle and Second Composite Particle

The electrode composite in the disclosure includes first composite particles and second composite particles. Both the first composite particles and the second composite particles function as electrode active materials. Here, in the disclosure, when it is simply referred to as "composite particles", it refers to both the first composite particles and the second composite particles.

As shown in FIG. 1A and FIG. 1B, the composite particle in the disclosure has an outer edge region α having an outer edge E and an inner region β located inward of the outer edge region α in a sectional shape. In the disclosure, the outer edge region α refers to a part of the composite particle within a length of L from the outer edge E. The inner region β refers to a part of the composite particle that lies more than the length L away from the outer edge E.

Here, when the mean particle size (D₅₀) of the composite particles is defined as L_{D}, the length L satisfies L/L_{D} = 0.2.

In each of the first composite particles and the second composite particles, the proportion of the binder in the outer edge region and the proportion of the binder in the inner region satisfy a predetermined relationship.

In each of the first composite particles, the proportion X1 of the binder in the outer edge region and the proportion X2 of the binder in the inner region satisfy 1.2 ≤ (X1/X2). In each of the first composite particles, the binder is more unevenly distributed to the vicinity of the outer edge compared to each of the second composite particles (described later). (X1/X2) may be higher than or equal to 1.3, may be higher than or equal to 1.5, may be higher than or equal to 1.7, may be higher than or equal to 2.0, may be higher than or equal to 2.3, or may be higher than or equal to 2.5. The upper limit of (X1/X2) is not limited and is, for example, lower than or equal to 4.8, may be lower than or equal to 4.0, may be lower than or equal to 3.8, may be lower than or equal to 3.6, may be lower than or equal to 3.3, may be lower than or equal to 3.1, may be lower than or equal to 2.8, or may be lower than or equal to 2.5. When (X1/X2) is excessively large, that is, when the binder is excessively unevenly distributed to the outer edge region, the reaction of the Si-based active material within the first composite particle may be inhibited by the binder. In this case, the reaction concentrates on the second composite particles (described later), and the second composite particles may degrade due to the repeated charging and discharging, which may lead to a decrease in the capacity retention rate of the battery.

In each of the second composite particles, the proportion Y1 of the binder in the outer edge region and the proportion Y2 of the binder in the inner region satisfy (Y1/Y2) < 1.2. (Y1/Y2) may be lower than or equal to 1.1 or may be lower than or equal to 1.0. On the other hand, (Y1/Y2) is, for example, higher than or equal to 0.6, may be higher than or equal to 0.8, or may be higher than or equal to 0.9.

The proportion of the binder can be determined, for example, from cross-sectional observations using a scanning electron microscope (SEM) as described below. Initially, a molded body, such as a composite layer, is produced from the electrode composite. For the obtained molded body, for example, cross-sectioning is performed by an ion milling method to obtain a cross-sectional image of the composite particle. EDX mapping analysis is performed on the obtained cross-sectional image to distinguish between an Si-based active material part and a binder part. Then, by calculating the area of the binder part in each of the above-described outer edge region and inner region, the proportion of the binder can be measured. By using osmium tetroxide (OsO₄) to stain the binder of the cross-section of the composite particles and determining the area of the stained part in each of the outer edge region and the inner region, the proportion of the binder can also be measured. Thus, the proportion of the binder in the disclosure can be understood as the area ratio of the binder. More specifically, the X1 and the Y1 can be understood as the proportion of the area of the binder to the area of the outer edge region in the outer edge region. The X2 and the Y2 can be understood as the proportion of the area of the binder to the area of the inner region in the inner region.

For each of the first composite particle and the second composite particle, the proportion of the binder is preferably an average value obtained by measuring a plurality of samples (particles). The number of samples is, for example, more than or equal to 10, may be more than or equal to 20, may be more than or equal to 50, or may be more than or equal to 100. The observation field of the SEM image in measuring the proportion of the binder is preferably set to a field including composite particles more than the number described above. The observation field is, for example, greater than or equal to 1000 µm² and less than or equal to 50000 µm².

Each of the composite particles in the disclosure is a particle in which a plurality of Si-based active materials is agglomerated together with a binder. The Si-based active material and the binder will be described later. The number of Si-based active materials contained in the composite particle is, for example, more than or equal to 10 and less than or equal to 100. The mean particle size L_{D}(D₅₀) of the composite particles is not limited and is, for example, greater than or equal to 10 µm and less than or equal to 100 µm. The mean particle size (D₅₀) refers to a particle size corresponding to a cumulative frequency of 50% in the particle size distribution. The mean particle size may be a value measured by a laser diffraction scattering particle size distribution measurement method, or may be a value measured by image analysis using software.

In the electrode composite, the proportion of the first composite particles to the total of the first composite particles and the second composite particle is higher than or equal to 5 wt%. The proportion of the first composite particles may be higher than or equal to 10 wt%, may be higher than or equal to 20 wt%, may be higher than or equal to 25 wt%, or may be higher than or equal to 30 wt%. On the other hand, the proportion of the first composite particles to the total of the first composite particles and the second composite particles is lower than or equal to 60 wt%. The proportion of the first composite particles may be lower than or equal to 50 wt%, may be lower than or equal to 40 wt%, or may be lower than or equal to 30 wt%. As described above, since the reaction of the first composite particles may be inhibited by the contained binder, when the proportion of the first composite particles is excessively high, the degradation of the second composite particles may be promoted, which may lead to a decrease in battery performance.

The proportion of the total of the first composite particles and the second composite particles (the content of the composite particles) in the electrode composite (solid content) is not limited; however, the proportion is, for example, higher than or equal to 60 wt% and lower than or equal to 90 wt%. When the content of the composite particles is excessively low, sufficient battery capacity may not be obtained. On the other hand, when the content of the composite particles is excessively high, sufficient electron conductivity and ion conductivity may not be obtained.

### (1) Si-Based Active Material

The composite particle in the disclosure contains an Si-based active material.

Examples of the Si-based active material include Si, Si alloys, and Si oxides. Examples of the Si alloys include Si-Al-based alloys, Si-Sn-based alloys, Si-In-based alloys, Si-Ag-based alloys, Si-Pb-based alloys, Si-Sb-based alloys, Si-Bi-based alloys, Si-Mg-based alloys, Si-Ca-based alloys, Si-Ge-based alloys, and Si-Pb-based alloys. The Si alloys may be binary alloys or multicomponent alloys having three or more components. The Si alloys each preferably contain an Si element as a main component. Examples of the Si oxides include SiO.

The Si-based active material may be primary particles or may be secondary particles formed by the aggregation of primary particles. The Si-based active material may be solid particles or may be porous particles (porous Si) having voids inside, particularly within the primary particles. The voids inside the primary particles can be confirmed through observation using a scanning electron microscope (SEM). The voidage of the primary particle is not limited. The voidage of the primary particle is, for example, higher than or equal to 4% or may be higher than or equal to 10%. The voidage is, for example, lower than or equal to 40% or may be lower than or equal to 20%. The voidage can be determined, for example, by the following procedure. Initially, a cross-sectional image of the Si-based active material is obtained using the SEM. The silicon part and the void part are distinguished and binarized based on the obtained image using image analysis software. The areas of the silicon part and the void part are obtained, and then the voidage (%) is calculated using the following formula. Voidage (%) = 100 × (Void part area) / ((Silicon part area) + (Void part area))

The average pore diameter in the primary particle (porous Si) is not limited and is, for example, greater than or equal to 10 nm and less than or equal to 100 nm. In the primary particle, the amount of voids with a pore diameter of 50 nm or less is, for example, greater than or equal to 0.05 cc/g and less than or equal to 0.30 cc/g.

The method of preparing porous Si may include, for example, a method of preparing an alloy of Li and Si (Li-Si alloy) and then removing Li from the Li-Si alloy. The Li-Si alloy can be obtained by, for example, mixing Li and Si. The method of removing Li from the Li-Si alloy may include, for example, a method of reacting the Li-Si alloy with an Li-extracting material. Examples of the Li-extracting material include alcohols, such as methanol, and acids, such as acetic acid.

The Si-based active material may be crystalline or may be amorphous. When the Si-based active material is crystalline, the Si-based active material generally has an Si crystal phase. An example of the Si crystal phase is a diamond crystal phase. General Si contains a diamond crystal phase as the Si crystalline phase. Si-based active materials may contain a diamond crystal phase as the main phase of the Si crystal phase.

Another example of the Si crystal phase is a silicon clathrate-type crystal phase. The silicon clathrate-type crystal phase may be a silicon clathrate I-type crystal phase or may be a silicon clathrate II-type crystal phase. In the silicon clathrate-type crystal phase, a plurality of Si elements form a polyhedron (cage) including pentagons or hexagons. This polyhedron has an internal space that can incorporate metal ions, such as Li ions. When metal ions are inserted in this space, the volume change due to charging and discharging can be further reduced. The Si-based active material may contain a silicon clathrate I-type crystal phase or may contain a silicon clathrate II-type crystal phase as the main phase of the Si crystal phase.

The proportion of the Si-based active material in each of the first composite particle and the second composite particle is, for example, higher than or equal to 70 wt% and lower than or equal to 95 wt%.

### (2) Binder

The composite particle in the disclosure contains a binder.

The type of binder in the composite particle is not limited. Examples of the binder include rubber-based binders, such as butadiene rubber (BR) and styrene-butadiene rubber (SBR), and fluoride-based binders, such as polyvinylidene fluoride (PVdF). The composite particle may contain one type of binder or may contain two or more types of binders. The type of binder may be the same for the first composite particle and the second composite particle or may be different.

The proportion of the binder in each of the first composite particle and the second composite particle is not limited and is, for example, higher than or equal to 1 wt% and lower than or equal to 30 wt%.

### (3) First Composite Particle and Second Composite Particle

The first composite particles and the second composite particles each may be a positive electrode active material or may be a negative electrode active material, and the latter is preferable. This is because a higher capacity battery can be obtained. A method of preparing the first composite particles and the second composite particles will be described in "C. Manufacturing Method for Electrode Composite".

### 2. Electrode Composite

The electrode composite in the disclosure may include at least one of an electrically conductive agent, a binder, and an electrolyte, in addition to the first composite particles and the second composite particles.

Examples of the electrically conductive agent include carbon materials, metal particles, and conductive polymers. Examples of the carbon materials include particulate carbon materials, such as acetylene black (AB) and Ketjen black (KB), and fibrous carbon materials, such as carbon fibers, carbon nanotubes (CNT), and carbon nanofibers (CNF). The proportion of the electrically conductive agent in the electrode composite is, for example, higher than or equal to 0.1 wt% and lower than or equal to 10 wt%.

Examples of the type of binder include binders similar to the above-described composite particles. The proportion of the binder in the electrode composite (excluding the binder in the composite particles) is not limited and is, for example, higher than or equal to 1 wt% and lower than or equal to 10 wt%.

The type of electrolyte will be described in "B. Battery". The proportion of the electrolyte in the electrode composite is, for example, higher than or equal to 10 wt% and lower than or equal to 60 wt%.

The electrode composite may contain a dispersion medium, such as a solvent. Examples of the solvent include organic solvents, such as butyl butyrate, dibutyl ether, heptane, and tetrahydrofuran. The electrode composite may be slurry or may be powder.

The electrode composite is generally used in batteries. A battery will be described in "B. Battery". The electrode composite may be a positive electrode composite or a negative electrode composite, and the latter is preferable. This is because higher capacity batteries can be obtained.

### B. Battery

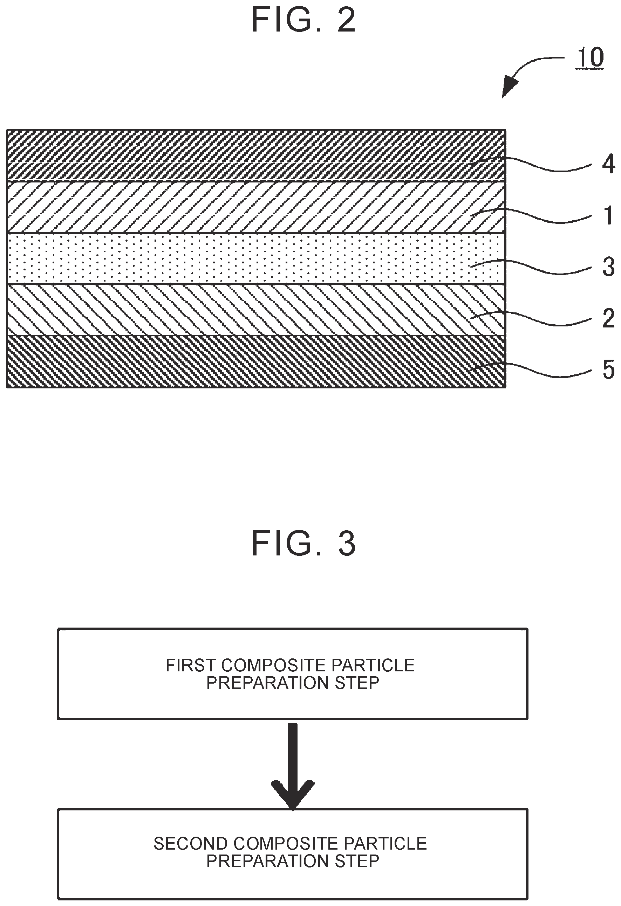

FIG. 2 is a schematic sectional view that illustrates a battery in the disclosure. As shown in FIG. 2, the battery 10 includes a positive electrode layer 1, a negative electrode layer 2, and an electrolyte layer 3 disposed between the positive electrode layer 1 and the negative electrode layer 2. The battery 10 includes a positive electrode current collector 4 and a negative electrode current collector 5. In the battery 10, the positive electrode layer 1 or the negative electrode layer 2 contains the above-described electrode composite. Although not specifically illustrated, in a solid-state battery, the electrolyte layer 3 is a solid electrolyte layer.

According to the disclosure, since the above-described electrode composite is contained, the battery and the solid-state battery in which the volume change of the electrode layer is suppressed are obtained. Here, as described above, the electrode composite is preferably a negative electrode composite. In other words, the negative electrode layer preferably contains the above-described electrode composite. For this reason, the details of the battery in which the negative electrode layer contains the above-described electrode composite will be described.

### 1. Negative Electrode Layer

The negative electrode layer contains the above-described electrode composite. The electrode composite is similar to the details described in "A. Electrode Composite", so the description thereof is omitted here. The thickness of the negative electrode layer is, for example, greater than or equal to 1 µm and less than or equal to 1000 µm.

### 2. Positive Electrode Layer

The positive electrode layer contains at least a positive electrode active material. The positive electrode layer may contain at least one of an electrically conductive agent, a binder, and an electrolyte as needed. The electrically conductive agent, the binder, and the electrolyte are similar to those described in "A. Electrode Composite".

Examples of the positive electrode active material include an oxide active material. Examples of the oxide active material include rock salt layered active materials, such as LiCoO₂, LiNi_{1/3}Co_{1/3}Mn_{1/3}O₂, and LiNi_{0.8}Co_{0.15}Al_{0.05}O₂, spinel-type active materials, such as LiMn₂O₄ and Li₄Ti₅O₁₂, and olivine-type active materials, such as LiFePO₄.

A coating layer containing an Li-ion conductive oxide may be formed on the surface of the oxide active material. This is because the reaction between the oxide active material and the solid electrolyte (especially, the sulfide solid electrolyte) can be suppressed. The Li-ion conductive oxide may include, for example, LiNbO₃, Li₄Ti₅O₁₂, and Li₃PO₄.

The shape of the positive electrode active material is, for example, a particulate shape. The mean particle size D₅₀ of the positive electrode active material is, for example, greater than or equal to 0.5 µm and less than or equal to 50 µm. The mean particle size (D₅₀) is as described above.

The thickness of the positive electrode layer is not limited and is, for example, greater than or equal to 1 µm and less than or equal to 1000 µm.

### 3. Electrolyte Layer

The electrolyte layer is a layer disposed between the positive electrode layer and the negative electrode layer and contains at least an electrolyte. The electrolyte layer may contain a solid electrolyte or may contain a liquid electrolyte (electrolytic solution), and the former is preferable. Here, the electrolyte layer containing a solid electrolyte is referred to as a solid electrolyte layer. In general, batteries with a solid electrolyte layer are referred to as solid-state batteries. A solid-state battery may be a semi-solid-state battery or may be an all-solid-state battery. A battery equipped with a solid electrolyte layer that contains only an inorganic solid electrolyte as a solid electrolyte corresponds to an all-solid-state battery.

Examples of the solid electrolyte include inorganic solid electrolytes, such as a sulfide solid electrolyte, an oxide solid electrolyte, a nitride solid electrolyte, a halide solid electrolyte, and complex hydrides. Among these, a sulfide solid electrolyte is particularly preferable. This is because the sulfide solid electrolyte has a high ion conductivity. The sulfide solid electrolyte generally contains sulfur (S) as the main component of the anion element. The oxide solid electrolyte, the nitride solid electrolyte, and the halide solid electrolyte generally respectively contain oxygen (O), nitrogen (N), and halogen (X) as the main components of the anion elements.

The sulfide solid electrolyte preferably contains, for example, an Li element, an X element (X is at least one of P, As, Sb, Si, Ge, Sn, B, Al, Ga, and In), and an S element. The sulfide solid electrolyte may further contain at least one of an O element and a halogen element.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₃-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₃-LiI, Li₂S-B₂S₃, Li₂S-P₂S₅-ZₘSₙ (where m and n are positive numbers, and Z is any one of Ge, Zn, and Ga), Li₂S-GeS₂, Li₂S-SiS₂-Li₃PO₄, Li₂S-SiS₂-LiₓMO_{y} (where x and y are positive numbers, and M is any one of P, Si, Ge, B, Al, Ga, and In).

Examples of the solid electrolyte include organic solid electrolytes, such as polymer electrolytes and gel electrolytes.

The solid electrolyte may be glassy and may have a crystal phase. Examples of the crystal phase include a Thio-LISICON-type crystal phase, an argyrodite-type crystal phase, and an LGPS-type crystal phase. The shape of the solid electrolyte is, for example, a particulate shape. The mean particle size of the solid electrolyte is, for example, greater than or equal to 0.01 µm and less than or equal to 10 µm. The ionic conductance of the solid electrolyte at 25°C is, for example, higher than or equal to 1 × 10⁻⁴ S/cm or may be higher than or equal to 1 × 10⁻³ S/cm.

The electrolyte layer may contain a binder as needed. Examples of the binder include the binders described in "A. Electrode Composite". The thickness of the electrolyte layer is not limited. The thickness of the electrolyte layer is, for example, greater than or equal to 1 µm and less than or equal to 1000 µm.

### 4. Negative Electrode Current Collector and Positive Electrode Current Collector

The negative electrode current collector is a member that collects electrons from the negative electrode layer, and the positive electrode current collector is a member that guides electrons to the positive electrode layer. Examples of the material for the positive electrode current collector include SUS, aluminum, nickel, iron, titanium, and carbon. Examples of the material for the negative electrode current collector include SUS, copper, nickel, and carbon. A coating layer containing at least one of Ni, Cr, and C may be formed on the surfaces of the positive electrode current collector and the negative electrode current collector. The coating layer may be a plating layer or may be a vapor-deposited layer. Examples of the shapes of the positive electrode current collector and the negative electrode current collector include a foil shape.

### 5. Battery

The battery in the disclosure may include an outer case that houses the above-described members. The outer case may include, for example, a laminate-type outer case and a case-type outer case. The battery in the disclosure may include a confining jig that applies a confining pressure in the thickness direction to the above-described members. A known jig may be used as the confining jig. The confining pressure is, for example, higher than or equal to 0.1 MPa and lower than or equal to 50 MPa, or may be higher than or equal to 1 MPa and lower than or equal to 20 MPa.

The battery in the disclosure is typically a lithium ion secondary battery. The battery in the disclosure may be a solid-state battery that includes a solid electrolyte layer. The battery in the disclosure may be a semi-solid-state battery or may be an all-solid-state battery. Examples of the applications of the battery include power supplies for vehicles, such as hybrid electric vehicles (HEVs), plug-in hybrid electric vehicles (PHEVs), battery electric vehicles (BEVs), gasoline vehicles, and diesel vehicles. The battery in the disclosure may be used as power supplies for mobile objects other than vehicles (such as railways, ships, and aircrafts) or may be used as power supplies for electrical products, such as information processing devices.

### C. Manufacturing Method for Electrode Composite

FIG. 3 is a flowchart that illustrates a manufacturing method for the electrode composite in the disclosure. As shown in FIG. 3, the manufacturing method in the disclosure is a method of manufacturing the above-described electrode composite, and includes a first composite particle preparation step of obtaining the first composite particles through a spray drying method, and a second composite particle preparation step of obtaining the second composite particles through a spray drying method.

According to the disclosure, it is possible to manufacture an electrode composite that contains the predetermined first composite particles and the predetermined second composite particles.

### 1. First Composite Particle Preparation Step

The first composite particle preparation step is a step of obtaining the first composite particles through a spray drying method. The first composite particles are similar to the details described in "A. Electrode Composite", so the description thereof is omitted here.

In the disclosure, the spray drying method refers to a method of preparing composite particles obtained by agglomerating the above-described Si-based active material and binder in a manner such that a slurry containing at least the Si-based active material and the binder is sprayed into hot air to cause the liquid in the slurry to evaporate.

The first composite particles can be prepared by adjusting the NV value of the slurry, the drying temperature, and the slurry feed rate. For example, when the NV value of the slurry is increased, it is possible to perform adjustment such that the binder is more unevenly distributed within the particles. When the drying temperature is increased, it is possible to perform adjustment such that the binder is more unevenly distributed within the particles. When the slurry feed rate is increased, it is possible to perform adjustment such that the binder is more dispersed within the particles.

The NV value of the slurry for preparing the first composite particles is, for example, higher than or equal to 15% and lower than or equal to 30%. The non-volatile content (NV) value in the disclosure refers to the weight percentage of the non-volatile components (solid components) contained in the slurry. The drying temperature for preparing the first composite particles is, for example, higher than or equal to 180°C and lower than or equal to 200°C. The slurry feed rate for preparing the first composite particles is, for example, higher than or equal to 100 g/hour and lower than or equal to 200 g/hour.

The first composite particle preparation step may be performed before the second composite particle preparation step (described later) or may be performed after the second composite particle preparation step.

### 2. Second Composite Particle Preparation Step

The second composite particle preparation step is a step of obtaining the second composite particles through a spray drying method. The second composite particles are similar to the details described in "A. Electrode Composite", so the description thereof is omitted here.

Similarly to the first composite particles, the second composite particles can be prepared by adjusting the NV value of the slurry, the drying temperature, and the slurry feed rate. The NV value of the slurry for preparing the second composite particles is, for example, higher than or equal to 5% and lower than or equal to 15%. The drying temperature for preparing the second composite particles is, for example, higher than or equal to 120°C and lower than or equal to 140°C. The slurry feed rate for preparing the second composite particles is, for example, higher than or equal to 400 g/hour and lower than or equal to 600 g/hour.

### 3. Other Steps

The manufacturing method in the disclosure generally includes an electrode composite preparation step of preparing the above-described electrode composite using the above-described first composite particles and second composite particles.

The electrode composite can be prepared by mixing the first composite particles and the second composite particles, together with at least one of a binder, an electrically conductive agent, and an electrolyte as needed. During the mixture, the above-described solvent may be added as needed. The proportions (mixing amounts) of the materials are adjusted as needed so that a desired electrode composite is obtained.

### 4. Electrode Composite

The electrode composite prepared through the above-described steps is similar to the details described in "A. Electrode Composite", so the description here is omitted.

The disclosure is not limited to the above-described embodiment. The above embodiment is illustrative, and any configuration in the disclosure, which includes substantially identical components to those of the technical idea described in the appended claims and achieves similar advantageous effects, is included within the technical scope of the disclosure.

### Example 1

### Preparation of First Composite Particles and Second Composite Particles

0.65 g of Si particles (manufactured by Kojundo Chemical Laboratory Co., Ltd.) and 0.60 g of Li metal (manufactured by Honjo Metal Co., Ltd.) were mixed in an agate mortar under an Ar atmosphere to obtain an LiSi precursor. In a glass reactor under an Ar atmosphere, 1.0 g of LiSi precursor and 125 mL of dispersion medium (1,3,5-trimethylbenzene, manufactured by Nacalai Tesque, Inc.) were mixed in an ultrasonic homogenizer (UH-50, manufactured by SMT Co., Ltd.). After mixing, the obtained LiSi precursor dispersion was cooled to 0°C, 125 mL of ethanol as an Li extractant (manufactured by Nacalai Tesque, Inc.) was added dropwise, and the mixture was allowed to react for 120 minutes. After the reaction, 50 mL of acetic acid (manufactured by Nacalai Tesque, Inc.) was further added dropwise, and the mixture was allowed to react for 60 minutes. After the reaction, the liquid and the solid reaction product were separated by vacuum filtration. The obtained solid reaction product was vacuum-dried at 120°C for two hours to recover an Si-based active material (porous Si) in the form of porous particles.

Porous Si and styrene-butadiene rubber (SBR) were dispersed and partially dissolved in dimethyl carbonate (manufactured by Nacalai Tesque, Inc.) to obtain a slurry. The slurry was sprayed into a spray dryer under a nitrogen gas atmosphere at 140°C to perform drying (spray drying method). By adjusting the NV value of the slurry, the spray pressure in the spray drying method, and the slurry feed rate, first composite particles and second composite particles having the proportions of the binders as shown in Table 1 were prepared. The proportions of the binders in the first composite particles and the second composite particles were confirmed by a method (described later).

The first composite particles were prepared with the slurry NV value set to 25%, the drying temperature set to 180°C, and the feed rate set to 150 g/hour. The second composite particles were prepared with the slurry NV value set to 12%, the drying temperature set to 140°C, and the feed rate set to 400 g/hour.

### Preparation of the Negative Electrode

The above-described first composite particles and second composite particles were weighed at the weight percentages shown in Table 1. The weighed composite particles were added to an organic solvent together with a binder (PVDF), an electrically conductive agent (VGCF), and a sulfide solid electrolyte (Li₂S-P₂S₅-based sulfide solid electrolyte), and were kneaded using an ultrasonic homogenizer. Thus, a negative electrode slurry was prepared. The negative electrode slurry was applied onto the negative electrode current collector (Cu foil) and dried. As a result, a negative electrode including the negative electrode current collector and the negative electrode layer was obtained.

### Preparation of Positive Electrode

A binder (PVDF), an electrically conductive agent, a sulfide solid electrolyte, and a positive electrode active material (NCM: LiNi_{0.8}Co_{0.15}Mn_{0.05}O₂) were added to an organic solvent. After the addition, the mixture was kneaded using an ultrasonic homogenizer to obtain a positive electrode slurry. The obtained positive electrode slurry was applied onto the positive electrode current collector (A1 foil) and dried. As a result, a positive electrode including the positive electrode current collector and the positive electrode layer was obtained.

### Preparation of Evaluation Battery

A binder (PVDF) and a sulfide solid electrolyte (Li₂S-P₂S₅-based sulfide solid electrolyte) were added to an organic solvent, and the mixture was kneaded using an ultrasonic homogenizer. Thus, a composite slurry was obtained. The composite slurry was applied to a substrate (Al foil) and dried. As a result, a transfer member including the substrate and the solid electrolyte layer was obtained.

The prepared positive electrode, negative electrode, and transfer member each were shaped into a strip. Subsequently, the positive electrode and the transfer member were stacked such that the positive electrode layer and the solid electrolyte layer faced each other, and then roll-pressed at 165°C under a pressure of 50 kN/cm. After that, the substrate was peeled off, and a positive electrode-side member was obtained. The negative electrode and the transfer member were stacked such that the negative electrode layer and the solid electrolyte layer faced each other, and then roll-pressed at 25°C under a pressure of 50 kN/cm. After that, the substrate was peeled off, and a negative electrode-side member was obtained. Subsequently, the negative electrode-side member was punched out to a diameter of 13.00 mm, and the positive electrode-side member was punched out to a diameter of 11.28 mm. Powdered sulfide solid electrolyte was placed on the solid electrolyte layer of the punched negative electrode-side member and uniaxially pressed. Subsequently, the negative electrode-side member and the positive electrode-side member were stacked such that the solid electrolyte layers faced each other, and current collecting tabs were attached to the positive electrode and the negative electrode. Then, the assembly was sealed in an aluminum laminate using a vacuum laminating sealer and confined at a pressure of 5 MPa. As a result, an evaluation battery (all-solid-state battery) was manufactured.

### Examples 2 to 3 and Comparative Example 2

Evaluation batteries were manufactured similarly to Example 1, except that a negative electrode slurry was prepared by changing the proportions (weight percentages) of the first composite particles and the second composite particles as shown in Table 1.

### Comparative Example 1

An evaluation battery was manufactured similarly to Example 1, except that a negative electrode slurry was prepared without using the first composite particles.

### Comparative Example 3

An evaluation battery was manufactured similarly to Example 1, except that a negative electrode slurry was prepared without using the second composite particles.

### Evaluation

### Proportion of Binder

The prepared first composite particles were pressed to produce a molded body. Similarly, the second composite particles were pressed to produce a molded body. Cross-sectional cutting was performed on the obtained molded bodies, and SEM-EDX measurement was conducted on the obtained cross-sections to measure the binder proportions in the first composite particles and the second composite particles. The results are shown in Table 1.

### Charge-Discharge Test

The volume changes of the battery and the electrode layer were evaluated based on variations in the confining pressure of the battery, measured using a load cell. Specifically, the evaluation battery was charged to 4.05 V, and the confining pressure at the time when the amount of charge reached 1000 mAh was calculated as the confining pressure variation. The results are shown in Table 1.

**Table 1**

| | Second Composite Particles | | First Composite Particles | | Confining Pressure Variation (MPa/mAh) |
|---|---|---|---|---|---|
| | (Y1/Y2) | wt% | (X1/X2) | wt% | |
| Comparative Example 1 | 1.0 | 100 | - | 0 | 0.31 |
| Example 1 | 1.0 | 90 | 2.0 | 10 | 0.30 |
| Example 2 | 1.0 | 75 | 2.0 | 25 | 0.28 |
| Example 3 | 1.0 | 50 | 2.0 | 50 | 0.29 |
| Comparative Example 2 | 1.0 | 25 | 2.0 | 75 | 0.32 |
| Comparative Example 3 | - | 0 | 2.0 | 100 | 0.34 |

As shown in Table 1, Examples 1 to 3 exhibited smaller variations in confining pressure than Comparative Examples 1 to 3, and it was confirmed that the electrode composite in the disclosure is capable of suppressing the volume changes of the electrode layer and the battery.

## Claims

1. An electrode composite comprising:
first composite particles; and
second composite particles, wherein
the first composite particles and the second composite particles each contain an Si-based active material and a binder;
the first composite particles and the second composite particles each have an outer edge region (α) having an outer edge (E) and an inner region (β) located inward of the outer edge region (α) in a sectional shape; and
where a proportion of the binder in the outer edge region (α) of each of the first composite particles is X1, a proportion of the binder in the inner region (β) of each of the first composite particles is X2, a proportion of the binder in the outer edge region (α) of each of the second composite particles is Y1, and a proportion of the binder in the inner region (β) of each of the second composite particles is Y2,
the X1 and the X2 satisfy 1.2 ≤ (X1/X2),
the Y1 and the Y2 satisfy (Y1/Y2) < 1.2, and
a proportion of the first composite particles to a total of the first composite particles and the second composite particles is higher than or equal to 5 wt% and lower than or equal to 60 wt%.

2. The electrode composite according to claim 1, wherein the Si-based active material has voids inside.

3. The electrode composite according to claim 1, wherein the proportion of the first composite particles is higher than or equal to 10 wt%.

4. The electrode composite according to claim 1, wherein the proportion of the first composite particles is lower than or equal to 50 wt%.

5. The electrode composite according to claim 1, wherein the X1 and the X2 satisfy (X1/X2) ≤ 2.0.

6. The electrode composite according to claim 1, wherein the X1 and the X2 satisfy 1.5 ≤ (X1/X2).

7. A battery (10) comprising:
a positive electrode layer (1);
a negative electrode layer (2); and
an electrolyte layer (3) disposed between the positive electrode layer (1) and the negative electrode layer (2), wherein
the positive electrode layer (1) or the negative electrode layer (2) contains the electrode composite according to any one of claims 1 to 6.

8. The battery (10) according to claim 7, wherein the negative electrode layer (2) contains the electrode composite.

9. The battery (10) according to claim 7, wherein the electrolyte layer (3) contains a solid electrolyte.

10. The battery (10) according to claim 9, wherein the electrolyte layer (3) contains a sulfide solid electrolyte as the solid electrolyte.

11. A solid-state battery (10) comprising:
a positive electrode layer (1);
a negative electrode layer (2); and
a solid electrolyte layer disposed between the positive electrode layer (1) and the negative electrode layer (2), wherein
the positive electrode layer (1) or the negative electrode layer (2) contains the electrode composite according to any one of claims 1 to 6.

12. A manufacturing method for manufacturing the electrode composite according to any one of claims 1 to 6, the manufacturing method comprising:
preparing the first composite particles by obtaining the first composite particles through a spray drying method; and
preparing the second composite particles by obtaining the second composite particles through the spray drying method.
